# EUROPEAN PATENT APPLICATION

(11) **EP 1 363 456 A2**
(43) Date of publication of application: **19.11.2003**
(21) Application number: 03009749.7
(22) Date of filing: 05.05.2003
(51) Int. Cl.: H04N 7/173

(54) **Video-on-demand service system and method of dynamic image distribution**

(30) Priority: 15.05.2002 JP 2002139377
(71) Applicant: NEC CORPORATION, Tokyo (JP)
(72) Inventor: Takahashi, Kiyo, Minato-ku, Tokyo (JP)
(74) Representative: VOSSIUS & PARTNER

(57) **Abstract**

In a video-on-demand service system, when a PDA terminal 8 is operated and a request is made for the distribution of the desired dynamic image content, that request is received by the nearest base station device 32 and is transmitted to a communication equipment 2 through a wireless LAN 200. The communication equipment 2 converts the request signal of the PDA terminal 8 to an appropriate format and transmits it to a data center 5 through an optical fiber 100. In the data center 5, the request signal is decoded, and the requested dynamic picture content is downloaded from a server and is then downloaded to the PDA terminal 8 of the user through the optical fiber 100, the communication equipment 2, the wireless LAN 200 and the base station device 32.

## Description

The present invention relates to a video-on-demand service system and a method of dynamic image distribution and, in particular, to a dynamic image distribution of a television program, a movie program and the like.

Portable display equipment such as portable televisions and DVD (Digital Versatile Disc) players and the like are known, to permit watching a television program while away from home.

Furthermore, in recent years, as cellular telephones have become popular, terminals have been developed for sending and receiving not only still images, but also dynamic images attached to an electronic mail, such terminals being representative of "third generation" or "3G" cellular networks, that is, terminals capable of receiving the content provided by a dynamic image.

However, the above-described conventional image-receiving terminals and the like require an antenna having a sufficient size and directionality to receive a television radio wave in a good condition so as to secure a good picture quality. In practice, such terminals are bulky and unable to maintain a stable directionality while in motion, e.g., on a train. Thus, in terms of reception quality, such conventional devices are often unable to permit viewing television or video while traveling, e.g., while being onboard a train and the like.

In contrast to this, in the case of portable display equipment and the like, although it is possible to secure a good image quality even while being aboard a train, it is necessary to carry the source of the image itself.

Furthermore, although even 3G cellular networks can provide television reception, there are many problems in terms of viewing quality and economy as discussed below, cellular telephones at present are impractical for this application. That is, as examples of the problems, in the first place, an image screen of a cellular telephone is small, and is not adequate for watching a dynamic image for a long period of time (as used herein, the term "dynamic image" includes, but is not limited to, full-motion video). In the second place, since a cellular telephone signal is not receivable underground, it is not possible to tune in at a subway station and the like. In the third place, when a dynamic image is received for a long period of time by a cellular telephone, the charge thereof is extremely expensive.

This is attributable not only to the fact that the capital cost of a base station (antenna) of a 3G cellular network is very expensive compared to a wireless LAN (Local Area Network), but also to the fact that, when a dynamic image service is provided by a 3G network, the capital cost of this base station leads to a great investment burden on the service provider. That is, it is believed that because a number of base stations are required to be built in a wide range of areas in order to provide a service level expected from a 3G cellular network and also because the cost of one base station is very expensive, the popularization of the dynamic image service by using the 3G cellular network is extremely difficult.

An object of the present invention is to overcome or alleviate the above-described problems, at least in part, and to provide a video-on-demand system in which a dynamic image content of a television program, a movie program and the like can be downloaded inside a station house or receiving area in a short period of time and the dynamic image content can be reproduced and watched locally, e.g., while being aboard the train; as well as to provide a corresponding method of dynamic image distribution.

To this end, the system according to the invention preferably comprises:
a wireless LAN (Local Area Network); and
a unit for distributing a dynamic image corresponding to a request made through a portable information terminal through said wireless LAN in response to said request from the portable information terminal.

The present invention has advantages in that, in the place where the wireless LAN is built to distribute a dynamic image, the dynamic image corresponding to a request is distributed to the portable information terminal through a wireless LAN in response to the request from the portable information terminal, so that the content of the television program, the movie program and the like can be downloaded in a short period of time in the station house or receiving area, and the dynamic image content can be reproduced and watched, e.g., even while being aboard a train.

The above and other objects, features and advantages of the present invention will become more apparent from the following detailed description when taken in conjunction with the accompanying drawings wherein:
Fig. 1 is a block diagram showing the construction of a video-on-demand service system according to one embodiment of the present invention;
Fig. 2 is a diagram showing the construction of each station house or receiving area facility;
Fig. 3 is a block diagram showing the construction of communication equipment of Fig. 2;
Fig. 4 is a block diagram showing the construction of a data center of Fig. 1; and
Fig. 5 is a sequence diagram illustrating the operation of a video-on-demand service system according to one embodiment of the present invention.

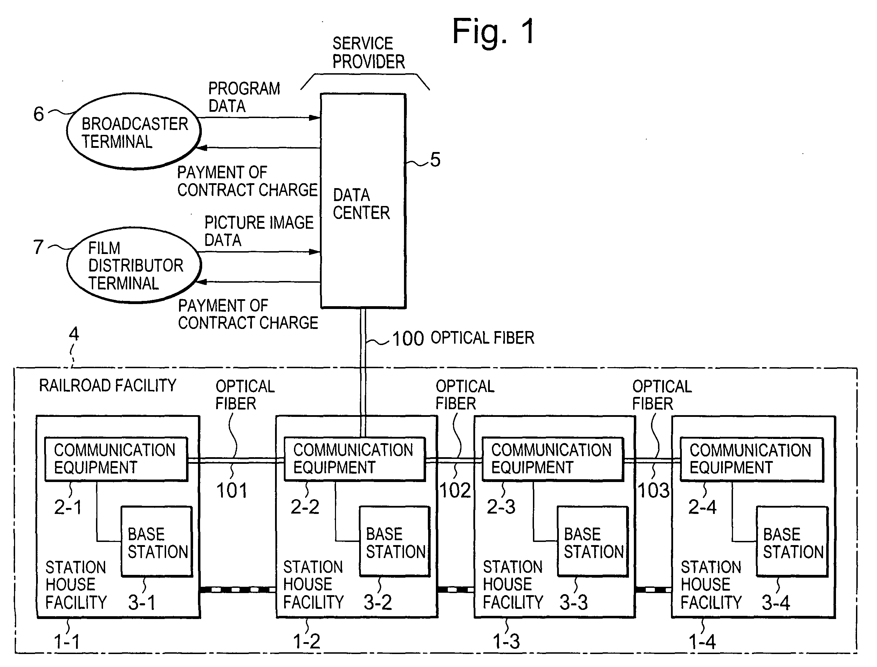

A Video-on-Demand Service System embodying the present invention will be described with reference to Fig. 1 through Fig. 5.

In Fig. 1, a service provider is associated with a railroad company, and in the railroad facility 4 of the railroad company, each station house or each major station house 1-1 to 1-4 and a data center 5 of the service provider are connected by optical fibers 100 to 103. In the case where the optical fibers 101 to 103 connecting each of the station houses 1-1 to 1-4 are previously laid down by the railroad company, the same may be used.

Communication equipment 2-1 to 2-4 is provided in each of the station house facilities 1-1 to 1-4 which are the object of the service. The communication equipment 2-1 to 2-4 exchange dynamic image content and control signals with a data center 5 through the optical fibers 100 to 103, and control base station devices (antennas) 3-1 to 3-4 and wireless LANs (Local Area Network) (not shown) inside each of the station house facilities 1-1 to 1-4, and distribute (download) the dynamic image content to the terminal (not shown) of the user.

Furthermore, the service provider provides a server (not shown) to store broadcast programs and/or movie programs and a communication equipment (not shown) for providing communication between each station at the data center 5. The dynamic image content such as the broadcast program, the movie program and the like are supplied under a contract between the service provider and the broadcaster or movie distributor. In this case, since the data center 5 is supplied with program data from the broadcaster terminal 6 and image data from the movie distributor terminal 7 respectively, these data are stored in the server. Incidentally, for the transfer of the dynamic image content between the service provider and the broadcaster or the movie distributor, a transmission line may be used, or a recording medium may be used.

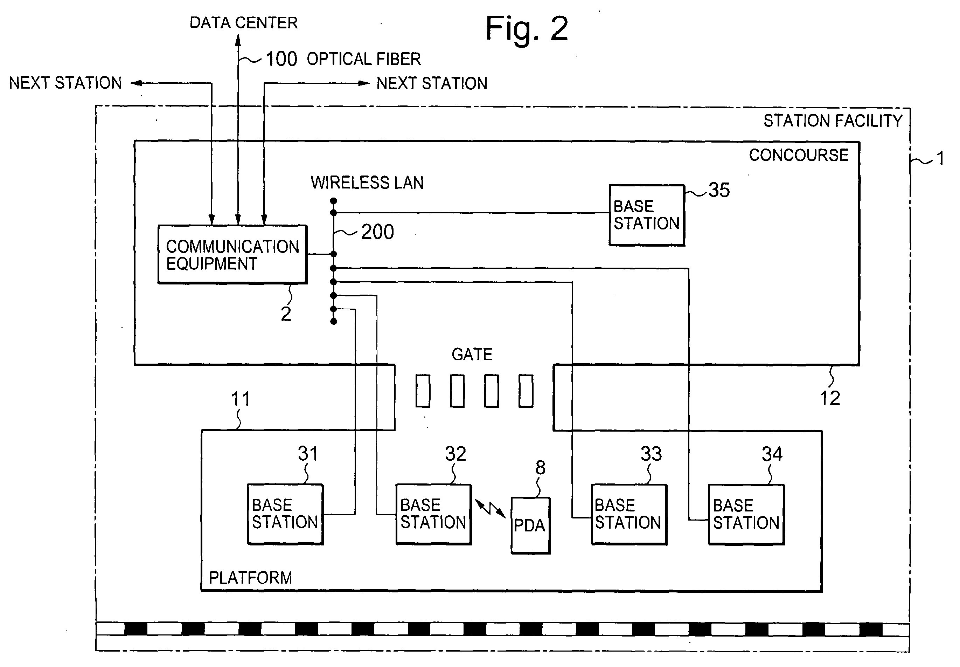

In Fig. 2, each of the station house facilities 1-1 to 1-4 is generically designated as a station house facility 1, and the communication equipment 2-1 to 2-4 are generically designated as communication equipment 2. The construction of each of the station house facilities 1-1 to 1-4 and the communication equipment 2-1 to 2-4 is the same as the construction of the station house facility 1 and the communication equipment 2, respectively.

The communication equipment 2 is provided in the station house facility 1, and is connected to the data center 5 by the optical fiber 100, and at the same time is connected also between the station house facility 1 and the next station by the optical fiber to relay the information with the data center 5. Furthermore, the communication equipment 2 is connected to the base station devices (antennas) 31 - 35 of a wireless LAN 200 through the wireless LAN 200.

As the wireless LAN 200, a high speed type regulated by the specification of the IEEE802.11a or a similar type having a data transmission speed of approximately 50 Mbps or a high speed type having not less than that speed is preferably used.

The base stations 31 to 34 are provided on the platform 11, and perform the sending and receiving of signals via PDA (Personal Digital Assistant) . Although a base station 35 in this embodiment is provided in a concourse inside the station house facility 1, it should not be limited to a platform 11 or a concourse 12, but may be provided in a meeting spot, an outlet and the like inside the station house facility 1. Furthermore, in Fig. 2, though four base station devices 31 to 34 are provided on the platform 11, needless to say, any desired number of devices may be provided by taking into consideration the access traffic of the user.

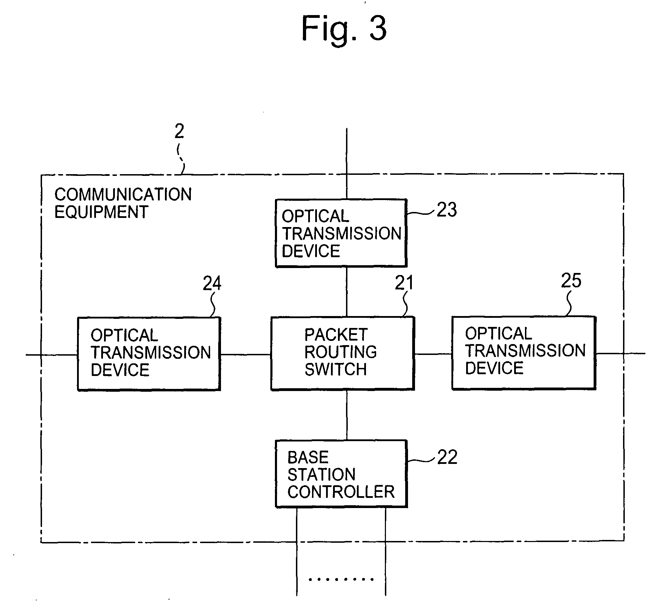

In Fig. 3, the communication equipment 2 is constituted by a packet routing switch 21, a base station controller 22, and optical transmission devices 23 to 25.

The packet routing switch 21 transmits packet data (dynamic image data) input from the optical transmission devices 23 to 25 to the base station controller 22 by switching, and the base station controller 22 delivers the packet data subjected to the switching by the packet routing switch 21 to a PDA 8 through the base station devices 31 to 35 which are connected. Incidentally, the communication equipment 2-1 to 2-4 shown in Fig. 1 have approximately the same construction as that of the communication equipment 2, and have the same operation accordingly.

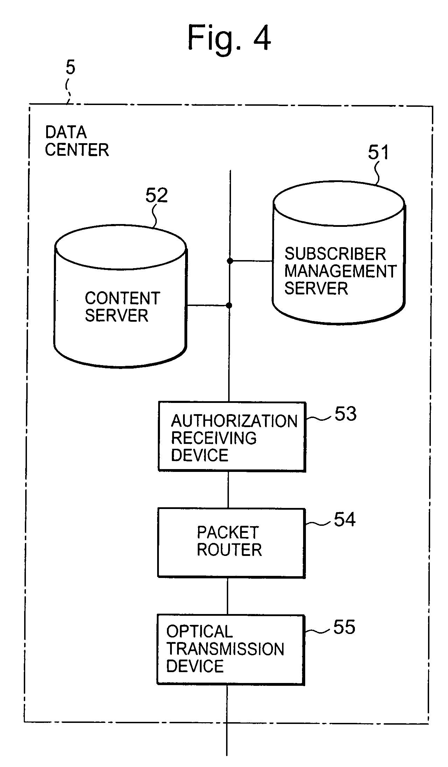

In Fig. 4, the data center 5 is constituted by a subscriber management server 51, a content server 52, an authorization receiving device 53, a packet router 54, and an optical transmission device 55.

The subscriber management server 51 controls the information (such as a password for authorization, accounting information on the content provided and the like) of the subscriber (the user who makes a contract for the supply of dynamic image content). The content server 52 is a server which stores a broadcasting program and image content.

The authorization receiving device 53 determines whether or not a request from the user received through the optical transmission device 55 and the packet router 54 is a request from a user who made a contract previously based on the information of the subscriber management server 51, and if it is determined to be a request from a contracting user, reads out the requested content from the content server 52 and delivers it to the packet router 54. The packet router 54 delivers the content delivered from the authorization receiving device 53 through the optical transmission device 55 to the base station device in which the request originating user is located.

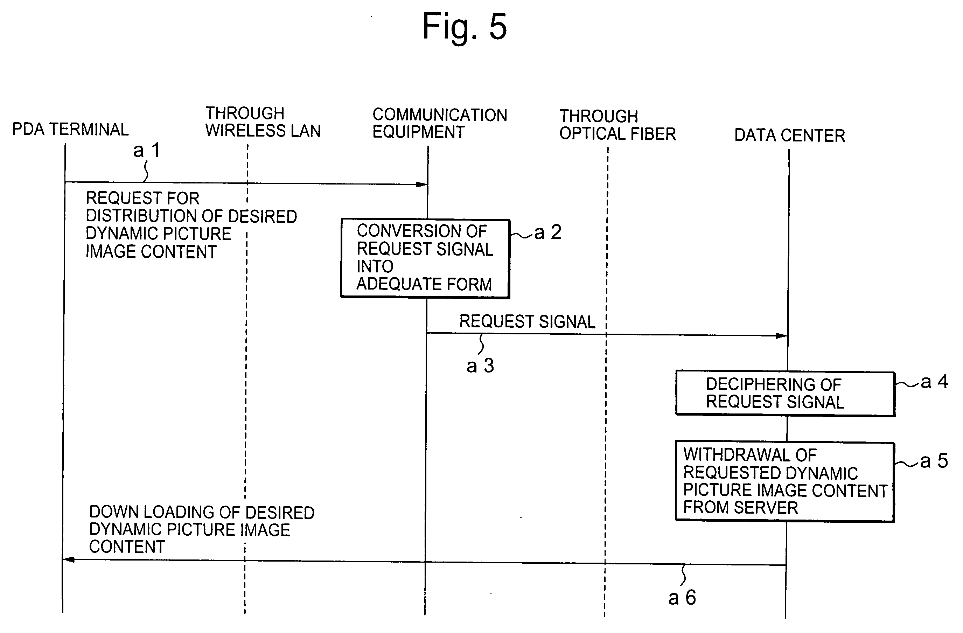

The operation of the video-on-demand service system according to one embodiment of the present invention will now be described with reference to Fig. 5 and the preceding Figs. 1-4.

When the user operates the PDA 8 by hand, that is, a wireless terminal equipped with a display device (which may also be a portable type computer) and requests the distribution of the desired dynamic image content, that request signal is received by the nearest base station device 32 and is transmitted to the communication equipment 2 through the wireless LAN 200 (a1 of Fig. 5). The communication equipment 2 converts the request signal from the PDA terminal 8 into an adequate form containing the request information and the identification information of the user or the PDA terminal 8 (a2 of Fig. 5) so as to be transmitted to the data center 5 through the optical fiber 100 (a3 of Fig. 5).

In the data center 5, the request signal is deciphered (a4 of Fig. 5), and the requested dynamic image content is downloaded from the server (a5 of Fig. 5), and is downloaded to the PDA terminal 8 of the user through a path of an opposite direction, that is, the optical fiber 100, the communication equipment 2, the wireless LAN 200 and the base station device 32 (a6 of Fig. 5).

With respect to the download time, if the wireless LAN 200 is of the IEEE802.11a type, the download speed is at a high speed such as the maximum 54 Mbps and, therefore, in the case where the definition of a reproduced image is 1 Mbps on an average, it is possible to download even a one hour program in only about one minute, which is fast enough to complete the download while the user waits for the next train to come.

The user can play back the dynamic image downloaded into the PDA terminal 8 by operating the PDA terminal 8. The service provider charges a charge to the user under the terms of the contract previously entered into between the service provider and the user according to the distributed content, the data amount of the dynamic image, the time zone and the like. This charging is performed based on the subscriber information accumulated in the subscriber management server 51.

Furthermore, the service provider pays a use fee based on the contract between itself and the broadcaster or the movie distributor with whom a purchase or resale contract of the dynamic image content has been made. Incidentally, even in the case where the user is already aboard the train, if the desired content is of a relatively short duration, it may be possible to download it at a station along the way while the train makes a stop.

In this way, in the present embodiment, in the station where the wireless LAN 200 is provided regardless of whether it is the station for an ordinary railroad train or a subway, the user downloads the dynamic image content of the television program such as news, drama and the like or a movie and the like to the PDA terminal 8 on hand, and can enjoy reproducing the dynamic image content while being aboard the train by operating the PDA terminal 8.

In the present embodiment, as a downloading service of the television program, it is possible to provide the television program after the lapse of a fixed period of time subsequent to the sign off of the broadcasting, and it is also possible to provide the program right after the sign off of the broadcasting.

With respect to the movie content, various patterns of a service commencement are contemplated such as the service commencement right after a first run at general cinema theaters, the service commencement after a fixed period of time subsequent to the first run at the general cinema theaters, the service commencement after the preview, the service commencement simultaneous with the sign on of the broadcasting at a cable television provider and the like, the service commencement simultaneous with a lifting of the ban on lending at rental video shops and the like, all of which depend on the contract made between the service provider and the movie distributor of the movie concerned.

In the present embodiment, although the communication equipment 2, 2-1 to 2-4 and the base station devices 3-1 to 3-4, 31 to 35 are provided in the station house facilities, the above-described equipment could also be provided in hall facilities, shopping malls, amusement parks or terminals of long-distance buses and the like, so that the present invention can be applied in a wide variety of settings.

Furthermore, although the above-described explanation describes an on-demand distribution service for dynamic images (e.g., television program, movie program), the on-demand distribution of the dynamic image other than the above-described, for example, a live image and the like at a tourist information center, a theater and the like is also possible, but not limited to this. Furthermore, a copying protection may be set on these dynamic images so as to be able to deal with an unauthorized use and the like.

Furthermore, in the present embodiment, when the distribution of the dynamic image is made to the PDA terminal 8 and the portable type PC, although the data center 5 makes an accounting, in addition to the accounting by the subscriber management server 51, there is contemplated, for example, such a method that, when a long-distance travel by a railroad or a bus is made and its fare is collected, the charge for the dynamic image content is collected together with the fare, and in accordance therewith, a code or a password is given to the user at the time when the dynamic image content is downloaded.

As described above, the present invention has advantages in that, in the place where the wireless LAN is built to distribute a dynamic image, the dynamic image corresponding to a request is distributed to the portable information terminal through a wireless LAN in response to the request from the portable information terminal, so that the content of the television program, the movie program and the like can be downloaded in a short period of time in a station house or other receiving area, and the dynamic image content can be reproduced and watched even while the user subsequently departs from the receiving area, e.g., while being aboard a train.

While this invention has been described with reference to certain preferred embodiments, it is to be understood that the subject matter encompassed by the invention is not limited to these embodiments. Instead, it is intended for the subject matter of the invention to include all such alternatives, modifications and equivalents as can be included within the spirit and scope of the following claims.

## Claims

1. A video-on-demand service system, comprising:
a wireless LAN (Local Area Network); and
a unit for distributing a dynamic image corresponding to a request to a portable information terminal through said wireless LAN in response to said request from the portable information terminal.

2. The video-on-demand service system as claimed in Claim 1, wherein:
said wireless LAN is provided in a facility in which at least one user is present.

3. The video-on-demand service system as claimed in Claim 1 or 2, wherein:
said wireless LAN is provided in a station house facility of a railroad.

4. The video-on-demand service system as claimed in Claim 1, 2 or 3, wherein:
said portable information terminal is a PDA (Personal Digital Assistant) terminal or a personal computer.

5. The video-on-demand service system as claimed in Claim 1, 2, 3 or 4, wherein:
said wireless LAN comprises a transmission line having at least about the same transmission speed as that of an IEEE802.11a, and which downloads said dynamic image to said portable information terminal.

6. The video-on-demand service system as claimed in Claim 1, 2, 3, 4 or 5, wherein:
said dynamic image comprises at least one of a television program and a movie program.

7. A video-on-demand service system, in particular according to any one of claims 1 to 6, comprising:
a wireless LAN (Local Area Network) for distributing a dynamic image;
a plurality of distribution facilities in which said wireless LAN is provided for distributing a dynamic image corresponding to a request to a portable information terminal through said wireless LAN in response to said request from said portable information terminal;
a data center in which said dynamic image is provided to said distribution facility;
a first optical transmission line interconnecting said plurality of distribution facilities; and
a second optical transmission line interconnecting at least one of said plurality of distribution facilities and said data center.

8. A method of dynamic image distribution, comprising:
receiving through a wireless LAN (Local Area Network) a request from a portable information terminal in an area in which said LAN is provided,; and
distributing a dynamic image corresponding to said request to the portable information terminal through said wireless LAN in response to said request.

9. The method of dynamic image distribution as claimed in Claim 7 , further comprising:
providing said wireless LAN in a facility in which at least one user is present.

10. The method of dynamic image distribution as claimed in Claim 8 or 9, further comprising:
providing said wireless LAN in a station house facility of a railroad.

11. The method of dynamic image distribution as claimed in Claim 8, 9 or 10, wherein:
the portable information terminal is a PDA (Personal Digital Assistant) or a personal computer.

12. The method of dynamic image distribution as claimed in Claim 8, 9, 10 or 11, wherein:
said wireless LAN comprises a transmission line having at least about the same transmission speed as that of an IEEE802.11a; and
said dynamic image is downloaded via said wireless LAN to said portable information terminal.

13. The method as claimed in any one of Claims 8 to 12, wherein:
said dynamic image is at least one of a television program and a movie program.
